# EUROPEAN PATENT APPLICATION

(11) **EP 4 443 291 A1**
(43) Date of publication of application: **09.10.2024**
(21) Application number: 22914736.8
(22) Date of filing: 27.12.2022
(51) Int. Cl.: G06F 9/4401, G06F 8/60

(54) **CLUSTER MANAGEMENT METHOD AND DEVICE, AND COMPUTING SYSTEM**

(30) Priority: 27.12.2021 CN 202111611749; 30.03.2022 CN 202210326025
(71) Applicant: Huawei Technologies Co., Ltd., Shenzhen, Guangdong 518129 (CN)
(72) Inventor: WU, Yilong, Shenzhen, Guangdong 518129 (CN); DU, Min, Shenzhen, Guangdong 518129 (CN); XIE, Hong, Shenzhen, Guangdong 518129 (CN)
(74) Representative: Pfenning, Meinig & Partner mbB
(86) International application number: PCT/CN2022/142188
(87) International publication number: WO 2023/125482

(57) **Abstract**

A cluster management method, a device, and a computing system are disclosed, and relate to the computer field. A network device included in a computing device in a cluster starts the computing device based on a first startup indication of a cluster management system, including: starting an operating system of the network device and feeding back a startup result of the operating system. In this way, the cluster management system sends the startup indication to the computing device, to control to start the computing device and the operating system of the network device included in the computing device, and the computing device feeds back the startup result. This resolves a problem of how to enable the cluster management system to communicate with the network device in the computing device, so that the cluster management system and the network device can sense each other, and the cluster management system manages the startup of the network device in the cluster.

## Description

This application claims priorities to Chinese Patent Application No. 202111611749.6, filed with the China National Intellectual Property Administration on December 27, 2021 and entitled "CLUSTER MANAGEMENT METHOD", and to Chinese Patent Application No. 202210326025.5, filed on March 30, 2022 and entitled "CLUSTER MANAGEMENT METHOD, DEVICE, AND COMPUTING SYSTEM", both of which are incorporated herein by reference in their entireties.

### TECHNICAL FIELD

This application relates to the computer field, and in particular, to a cluster management method, a device, and a computing system.

### BACKGROUND

A data processing unit (data processing unit, DPU) is a multi-core processor with a high-performance computing capability. The DPU offloads applications related to artificial intelligence, storage, and the like that run on another chip (for example, a central processing unit (central processing unit, CPU) or a graphics processing unit (graphics processing unit, GPU)) in a computing device, to improve data processing performance of the computing device and reduce load of the computing device. Currently, the DPU is used in a computing device in a cluster. In this case, a cluster management system cannot directly communicate with an operating system (operating system, OS) and a service of the DPU. Consequently, the cluster management system and the DPU cannot sense each other.

### SUMMARY

This application provides a cluster management method, a device, and a computing system, to resolve a problem of how to enable a cluster management system to communicate with a DPU in a computing device.

According to a first aspect, a cluster management method is provided, where a network device included in a computing device in a cluster starts the computing device based on a first startup indication of a cluster management system, including starting an operating system of the network device and feeding back a startup result of the operating system. In this way, the cluster management system sends the startup indication to the network device of the computing device, and the network device controls to start the computing device and the operating system of the network device, and feeds back the startup result to the cluster management system. This resolves a problem that the cluster management system cannot directly communicate with the network device in the computing device, so that the cluster management system and the network device can sense each other, and the cluster management system manages the startup of the network device in the cluster.

In a possible implementation, the network device includes two storage areas. The network device determines a startup mode of the network device based on the obtained first startup indication, and starts, when the startup mode is a dual-area startup mode, the operating system that is of the network device and that is stored in a first storage area in the two storage areas. The dual-area startup mode indicates a startup manner of starting the operating system based on the two storage areas that store the operating system. In this way, the network device starts the operating system based on the two storage areas, so that reliability of starting the operating system can be improved.

In a possible implementation, the startup mode may further include a single-area startup mode. The single-area startup mode indicates a startup manner of starting the operating system based on one storage area that stores the operating system.

The network device may determine the startup mode in the following two possible manners.

In a possible example, the determining a startup mode of the network device based on the obtained first startup indication includes: The network device obtains the first startup indication, and determines the startup mode based on a startup identifier included in the first startup indication, in other words, the network device may determine, based on the startup identifier, that the startup mode is the dual-area startup mode and the single-area startup mode. In this way, the startup indication directly indicates the startup mode of the network device, so that the network device starts based on the indication of the cluster management system, and a sensing degree between the cluster management system and the network device is improved.

In another possible example, the determining a startup mode of the network device based on the obtained first startup indication includes: The network device obtains the first startup indication, and determines the startup mode of the network device according to a preset rule. The preset rule indicates to start the computing device in which the network device is located preferentially in the dual-area startup mode. Because the network device starts in the dual-area startup mode, the reliability of starting the operating system can be improved. The network device is enabled to start the computing device in which the network device is located preferentially in the dual-area startup mode, so that the reliability of starting the operating system can be ensured, and startup flexibility of the network device can be enhanced.

In another possible implementation, the starting, when the startup mode is a dual-area startup mode, the operating system in a first storage area includes: The network device determines the first storage area in the two storage areas in a polling manner, and starts the operating system in the first storage area. The polling manner indicates to alternately start operating systems in different storage areas respectively based on a plurality of startup indications sent by the cluster management system.

For example, after the network device starts the operating system in the first storage area based on the first startup indication, the network device may further obtain a second startup indication. The second startup indication and the first startup indication are startup indications that are sent by the cluster management system and that are adjacent in a time sequence. The second startup indication indicates the network device to start the computing device in which the network device is located. The network device determines the startup mode of the network device based on the second startup indication, and when the startup mode is the dual-area startup mode, the network device starts the operating system that is of the network device and that is stored in a second storage area of the network device.

In this way, the operating systems in the storage areas are alternately started in the polling manner, so that a service life of a storage device can be increased.

In another possible implementation, when the startup result is that the startup fails, the network device starts the operating system of a second storage area in the two storage areas other than the first storage area. In this way, the operating system can be restored as quickly as possible to improve reliability of the entire network device and user experience, and reduce impact of network device interruption duration on a service.

In another possible implementation, a startup response is fed back, including: feeding back the startup response to the cluster management system through a communication network through which the network device is directly connected to the cluster management system.

In another possible implementation, a startup response is fed back, including: feeding back the startup response to the cluster management system through a communication network through which a communication interface of the computing device in which the network device is located is connected to the cluster management system. For example, the network device sends a feedback startup response to the computing device through a PCIe bus, and the computing device feeds back the startup response to the cluster management system through the communication network.

Compared with feeding back the startup response to the cluster management system through the communication network through which the network device is directly connected to the cluster management system, that the startup response is transmitted through a bus interface inside the computing device can improve a speed of transmitting the startup response.

In another possible implementation, after starting the operating system, the network device may further upgrade the operating system. The method further includes: The network device performs an upgrade operation on the network device based on an upgrade indication of the cluster management system, and feeds back an upgrade result of the operating system. In this way, the cluster management system sends the upgrade indication to the computing device to control to upgrade the computing device and the operating system of the network device included in the computing device, and the computing device feeds back the upgrade result. This resolves a problem of how to enable the cluster management system to communicate with the network device in the computing device about the upgrade operation, so that the cluster management system and the network device can sense each other, and upgrade management of the network device in the cluster by the cluster management system is implemented.

In another possible implementation, the network device determines the startup mode of the network device based on the obtained upgrade indication. When the startup mode is the dual-area startup mode, the network device upgrades the operating system that is of the network device and that is stored in a second storage area other than a first storage area in the two storage areas. The second storage area is a standby storage area, and is used to synchronize or perform image storage on data of the operating system stored in the first storage area. In this way, the network device upgrades the operating system based on the two storage areas, so that reliability of the operating system upgrade can be improved.

Further, when the operating system in the second storage area is successfully upgraded, an upgrade operation is performed on the operating system in the first storage area. When the operating system in the second storage area fails to be upgraded, a rollback operation is performed on the operating system in the second storage area. In this way, the operating systems stored in the two storage areas are consistent, data synchronization of the operating systems is ensured, and a running fault of an application program caused by a data error of the operating systems is avoided.

In another possible implementation, the network device includes a microprocessor unit (Microprocessor Unit, MPU), a basic input/output system (Basic Input/Output System, BIOS), and a central processing unit (Central Processing unit, CPU). The microprocessor is configured to manage a status of a dual-area enabling switch, where the state of the dual-area enabling switch indicates the startup mode. The basic input/output system is configured to determine the startup mode of the network device based on the status of the dual-area enabling switch. The central processing unit is configured to start the operating system of the network device in the dual-area startup mode or the single-area startup mode. In this way, a manner of starting the operating system in the dual-area startup mode based on server-like hardware (the MCU, the CPU, the BIOS, and the MPU) can not only be applied on an eMMC medium, but also can be applied on another general-purpose storage medium like an SSD or an HDD. This improves commonality of the solutions.

It should be noted that starting the computing device further includes starting an operating system of the computing device, and starting an application program running on the network device and an application program running on the computing device.

In addition, the network device may be a device configured to implement communication between devices, for example, a DPU or an intelligent network interface card. The operating system of the network device may be stored in the cluster management system in a container image manner. This reduces an occupation rate of storage space of the cluster management system by the operating system.

According to a second aspect, a cluster management method is provided, where a network device included in a computing device in a cluster performs an upgrade operation on the network device based on an upgrade indication of a cluster management system, and feeds back an upgrade result of an operating system. In this way, the cluster management system sends the upgrade indication to the computing device to control to upgrade the computing device and the operating system of the network device included in the computing device, and the computing device feeds back the upgrade result. This resolves a problem of how to enable the cluster management system to communicate with the network device in the computing device about the upgrade operation, so that the cluster management system and the network device can sense each other, and upgrade management of the network device in the cluster by the cluster management system is implemented.

In another possible implementation, the network device determines a startup mode of the network device based on the obtained upgrade indication. When the startup mode is a dual-area startup mode, the network device upgrades the operating system that is of the network device and that is stored in a second storage area other than a first storage area in two storage areas. The second storage area is a standby storage area, and is used to synchronize or perform image storage on data of the operating system stored in the first storage area. In this way, the network device upgrades the operating system based on the two storage areas, so that reliability of the operating system upgrade can be improved.

The startup mode may further include a single-area startup mode. The single-area startup mode indicates a startup manner of starting the operating system based on one storage area that stores the operating system.

The network device may determine the startup mode in the following two possible manners.

In a possible example, the determining a startup mode of the network device based on the obtained upgrade indication includes: The network device obtains the upgrade indication, and determines the startup mode based on a startup identifier included in the upgrade indication, in other words, the network device may determine, based on the startup identifier, that the startup mode is the dual-area startup mode and the single-area startup mode. In this way, the upgrade indication directly indicates the startup mode of the network device, so that the network device is upgraded based on the indication of the cluster management system, and a sensing degree between the cluster management system and the network device is improved.

In another possible example, the determining a startup mode of the network device based on the obtained upgrade indication includes: The network device obtains the upgrade indication, and determines the startup mode of the network device according to a preset rule. The preset rule indicates to upgrade the computing device in which the network device is located preferentially in the dual-area startup mode. Because the network device is upgraded in the dual-area startup mode, the reliability of the operating system upgrade can be improved. The network device is enabled to upgrade the computing device in which the network device is located preferentially in the dual-area startup mode, so that reliability of the operating system upgrade can be ensured, and upgrade flexibility of the network device can be enhanced.

In another possible implementation, when the startup mode is the dual-area startup mode, the operating system in the second storage area is upgraded, including: When the network device runs the operating system in the first storage area, the network device determines the second storage area in the two storage areas in a polling manner, and upgrades the operating system in the second storage area. The polling manner indicates to alternately start operating systems in different storage areas respectively based on a plurality of startup indications sent by the cluster management system.

For example, the network device determines the startup mode of the network device based on the obtained startup indication, and when the startup mode is the dual-area startup mode, the network device starts the operating system that is of the network device and that is stored in the first storage area of the network device. The startup indication indicates the network device to start the computing device in which the network device is located. After the network device starts the operating system in the first storage area based on the startup indication, the network device determines the startup mode of the network device based on the obtained upgrade indication. When the startup mode is the dual-area startup mode, the network device upgrades the operating system that is of the network device and that is stored in the second storage area, other than the first storage area, in the two storage areas of the network device. The startup indication and the upgrade indication are startup indications that are sent by the cluster management system and that are adjacent in a time sequence.

In this way, the operating systems in the storage areas are alternately started in the polling manner, so that a service life of the storage device can be increased.

Further, when the operating system in the second storage area is successfully upgraded, an upgrade operation is performed on the operating system in the first storage area. When the operating system in the second storage area fails to be upgraded, a rollback operation is performed on the operating system in the second storage area. In this way, the operating systems stored in the two storage areas are consistent, data synchronization of the operating systems is ensured, and a running fault of an application program caused by a data error of the operating systems is avoided.

In another possible implementation, an upgrade response is fed back, including: feeding back the upgrade response to the cluster management system through a communication network through which the network device is directly connected to the cluster management system.

In another possible implementation, an upgrade response is fed back, including: feeding back the upgrade response to the cluster management system through a communication network through which a communication interface of the computing device in which the network device is located is connected to the cluster management system. For example, the network device sends a feedback upgrade response to the computing device through a PCIe bus, and the computing device feeds back the upgrade response to the cluster management system through the communication network.

Compared with feeding back the startup response to the cluster management system through the communication network through which the network device is directly connected to the cluster management system, that the startup response is transmitted through a bus interface inside the computing device can improve a speed of transmitting the startup response.

According to a third aspect, a cluster management apparatus is provided, including a communication module and a startup module. The startup module is configured to start a computing device based on a first startup indication of a cluster management system, including starting an operating system of a network device. The communication module is configured to feed back a startup result of the operating system. In this way, the cluster management system sends the startup indication to the computing device, to control to start the computing device and the operating system of the network device included in the computing device, and the computing device feeds back the startup result. This resolves a problem of how to enable the cluster management system to communicate with the network device in the computing device, so that the cluster management system and the network device can sense each other, and the cluster management system manages the startup of the network device in the cluster.

In a possible implementation, the network device includes two storage areas. The cluster management apparatus further includes a decision module. The decision module is configured to determine a startup mode of the network device based on the obtained first startup indication. When the startup mode is a dual-area startup mode, the startup module is configured to start the operating system that is of the network device and that is stored in a first storage area in the two storage areas. The dual-area startup mode indicates a startup manner of starting the operating system based on the two storage areas that store the operating system. In this way, the network device starts the operating system based on the two storage areas, so that reliability of starting the operating system can be improved.

The startup mode may further include a single-area startup mode. The single-area startup mode indicates a startup manner of starting the operating system based on one storage area that stores the operating system.

The network device may determine the startup mode in the following two possible manners.

In a possible example, when determining the startup mode of the network device based on the obtained first startup indication, the decision module is specifically configured to obtain the first startup indication, and determine the startup mode based on a startup identifier included in the first startup indication, that is, determine, based on the startup identifier, that the startup mode is the dual-area startup mode and the single-area startup mode. In this way, the startup indication directly indicates the startup mode of the network device, so that the network device starts based on the indication of the cluster management system, and a sensing degree between the cluster management system and the network device is improved.

In another possible example, when determining the startup mode of the network device based on the obtained first startup indication, the decision module is specifically configured to obtain the first startup indication, and determine the startup mode of the network device according to a preset rule. The preset rule indicates to start the computing device in which the network device is located preferentially in the dual-area startup mode. Because the network device starts in the dual-area startup mode, the reliability of starting the operating system can be improved. The network device is enabled to start the computing device in which the network device is located preferentially in the dual-area startup mode, so that the reliability of starting the operating system can be ensured, and startup flexibility of the network device can be enhanced.

In another possible implementation, when the startup mode is the dual-area startup mode and the startup module starts the operating system of the first storage area, the startup module is specifically configured to determine the first storage area in the two storage areas in a polling manner, and start the operating system in the first storage area. The polling manner indicates to alternately start operating systems in different storage areas respectively based on a plurality of startup indications sent by the cluster management system.

For example, after the operating system in the first storage area is started based on the first startup indication, a second startup indication may be further obtained. The second startup indication and the first startup indication are startup indications that are sent by the cluster management system and that are adjacent in a time sequence. The second startup indication indicates the network device to start the computing device in which the network device is located. The decision module is further configured to determine the startup mode of the network device based on the second startup indication, and when the startup mode is the dual-area startup mode, the startup module is further configured to start the operating system that is of the network device and that is stored in a second storage area of the network device.

In this way, the operating systems in the storage areas are alternately started in the polling manner, so that a service life of a storage device can be increased.

In another possible implementation, when the startup result is that the startup fails, the startup module is further configured to start the operating system in the second storage area in the two storage areas other than the first storage area. In this way, the operating system can be restored as quickly as possible to improve reliability of the entire network device and user experience, and reduce impact of network device interruption duration on a service.

In another possible implementation, when feeding back a startup response, the communication module is specifically configured to feed back the startup response to the cluster management system through a communication network through which the network device is directly connected to the cluster management system.

In another possible implementation, when feeding back a startup response, the communication module is specifically configured to feed back the startup response to the cluster management system through a communication network through which a communication interface of the computing device in which the network device is located is connected to the cluster management system For example, the network device sends a feedback startup response to the computing device through a PCIe bus, and the computing device feeds back the startup response to the cluster management system through the communication network.

Compared with feeding back the startup response to the cluster management system through the communication network through which the network device is directly connected to the cluster management system, that the startup response is transmitted through a bus interface inside the computing device can improve a speed of transmitting the startup response.

In another possible implementation, after the operating system is started, the operating system may be further upgraded. The apparatus further includes an upgrade module. The upgrade module is configured to perform an upgrade operation on the network device based on an upgrade indication of the cluster management system, and the communication module is further configured to feed back an upgrade result of the operating system. In this way, the cluster management system sends the upgrade indication to the computing device to control to upgrade the computing device and the operating system of the network device included in the computing device, and the computing device feeds back the upgrade result. This resolves a problem of how to enable the cluster management system to communicate with the network device in the computing device about the upgrade operation, so that the cluster management system and the network device can sense each other, and upgrade management of the network device in the cluster by the cluster management system is implemented.

In another possible implementation, the decision module is further configured to determine the startup mode of the network device based on the obtained upgrade indication, and the upgrade module is configured to upgrade the operating system that is of the network device and that is stored in the second storage area in the two storage areas other than the first storage area when the startup mode is the dual-area startup mode. The second storage area is a standby storage area, and is used to synchronize or perform image storage on data of the operating system stored in the first storage area. In this way, the network device upgrades the operating system based on the two storage areas, so that reliability of the operating system upgrade can be improved.

Further, when the operating system in the second storage area is successfully upgraded, the upgrade module is further configured to perform an upgrade operation on the operating system in the first storage area. When the operating system in the second storage area fails to be upgraded, the upgrade module is further configured to perform a rollback operation on the operating system in the second storage area. In this way, the operating systems stored in the two storage areas are consistent, data synchronization of the operating systems is ensured, and a running fault of an application program caused by a data error of the operating systems is avoided.

According to a fourth aspect, a cluster management apparatus is provided, including a communication module and an upgrade module. The upgrade module is configured to perform an upgrade operation on a network device based on an upgrade indication of a cluster management system, and the communication module is configured to feed back an upgrade result of an operating system. In this way, the cluster management system sends the upgrade indication to a computing device to control to upgrade the computing device and the operating system of the network device included in the computing device, and the computing device feeds back the upgrade result. This resolves a problem of how to enable the cluster management system to communicate with the network device in the computing device about the upgrade operation, so that the cluster management system and the network device can sense each other, and upgrade management of the network device in the cluster by the cluster management system is implemented.

In another possible implementation, the cluster management apparatus further includes a decision module. The decision module is configured to determine a startup mode of the network device based on the obtained upgrade indication. When the startup mode is a dual-area startup mode, the upgrade module is configured to upgrade the operating system that is of the network device and that is stored in a second storage area other than a first storage area in two storage areas. The second storage area is a standby storage area, and is used to synchronize or perform image storage on data of the operating system stored in the first storage area. In this way, the network device upgrades the operating system based on the two storage areas, so that reliability of the operating system upgrade can be improved.

The startup mode may further include a single-area startup mode. The single-area startup mode indicates a startup manner of starting the operating system based on one storage area that stores the operating system.

The network device may determine the startup mode in the following two possible manners.

In a possible example, when determining the startup mode of the network device based on the obtained upgrade indication, the decision module is specifically configured to obtain the upgrade indication, and determine the startup mode based on a startup identifier included in the upgrade indication, in other words, the network device may determine, based on the startup identifier, that the startup mode is the dual-area startup mode and the single-area startup mode. In this way, the upgrade indication directly indicates the startup mode of the network device, so that the network device is upgraded based on the indication of the cluster management system, and a sensing degree between the cluster management system and the network device is improved.

In another possible example, when determining the startup mode of the network device based on the obtained upgrade indication, the decision module is specifically configured to obtain the upgrade indication, and determine the startup mode of the network device according to a preset rule. The preset rule indicates to upgrade the computing device in which the network device is located preferentially in the dual-area startup mode. Because the network device is upgraded in the dual-area startup mode, the reliability of the operating system upgrade can be improved. The network device is enabled to upgrade the computing device in which the network device is located preferentially in the dual-area startup mode, so that reliability of the operating system upgrade can be ensured, and upgrade flexibility of the network device can be enhanced.

In another possible implementation, when the startup mode is the dual-area startup mode, when upgrading the operating system in the second storage area, the upgrade module is specifically configured to determine the second storage area in two storage areas in a polling manner and upgrade the operating system in the second storage area when the network device runs the operating system in the first storage area. The polling manner indicates to alternately start operating systems in different storage areas respectively based on a plurality of startup indications sent by the cluster management system.

For example, the startup mode of the network device is determined based on the obtained startup indication, and when the startup mode is the dual-area startup mode, the operating system that is of the network device and that is stored in the first storage area of the network device is started. The startup indication indicates the network device to start the computing device in which the network device is located. After the operating system in the first storage area is started based on the startup indication, the startup mode of the network device is determined based on the obtained upgrade indication. When the startup mode is the dual-area startup mode, the operating system that is of the network device and that is stored in the second storage area in the two storage areas of the network device other than the first storage area is upgraded. The startup indication and the upgrade indication are startup indications that are sent by the cluster management system and that are adjacent in a time sequence.

In this way, the operating systems in the storage areas are alternately started in the polling manner, so that a service life of the storage device can be increased.

Further, when the operating system in the second storage area is successfully upgraded, the upgrade module is further configured to perform an upgrade operation on the operating system in the first storage area. When the operating system in the second storage area fails to be upgraded, the upgrade module is further configured to perform a rollback operation on the operating system in the second storage area. In this way, the operating systems stored in the two storage areas are consistent, data synchronization of the operating systems is ensured, and a running fault of an application program caused by a data error of the operating systems is avoided.

In another possible implementation, when feeding back an upgrade response, the communication module is specifically configured to feed back the upgrade response to the cluster management system through a communication network through which the network device is directly connected to the cluster management system.

In another possible implementation, when feeding back an upgrade response, the communication module is specifically configured to feed back the upgrade response to the cluster management system through a communication network through which a communication interface of the computing device in which the network device is located is connected to the cluster management system. For example, the network device sends a feedback upgrade response to the computing device through a PCIe bus, and the computing device feeds back the upgrade response to the cluster management system through the communication network.

Compared with feeding back the startup response to the cluster management system through the communication network through which the network device is directly connected to the cluster management system, that the startup response is transmitted through a bus interface inside the computing device can improve a speed of transmitting the startup response.

According to a fifth aspect, a network device is provided. The network device is configured to perform corresponding operation steps of the cluster management method in any one of the first aspect or the possible designs of the first aspect, or perform corresponding operation steps of the cluster management method in any one of the second aspect or the possible designs of the second aspect.

According to a sixth aspect, a computing device is provided. The computing device includes at least one processor, a memory, and a network device. The memory is configured to store a group of computer instructions. When executing the group of computer instructions, the network device performs operation steps of the cluster management method in any one of the first aspect or the possible implementations of the first aspect, or performs operation steps of the cluster management method in any one of the second aspect or the possible designs of the second aspect.

According to a seventh aspect, a computing system is provided. The computing system includes a memory and a network device in the fifth aspect. The memory is configured to store a group of computer instructions. When executing the group of computer instructions, the network device performs operation steps of the cluster management method in any one of the first aspect or the possible implementations of the first aspect, or performs operation steps of the cluster management method in any one of the second aspect or the possible designs of the second aspect.

According to an eighth aspect, a computer cluster is provided, where the computer cluster includes a cluster management system and a computing device, and the computing device includes a network device in the fifth aspect. When receiving indications sent by the cluster management system, the network device performs operation steps of the cluster management method in any one of the first aspect or the possible implementations of the first aspect, or performs operation steps of the cluster management method in any one of the second aspect or the possible designs of the second aspect.

According to a ninth aspect, a computer-readable storage medium is provided, including computer software instructions. When the computer software instructions are run on a network device, the network device is enabled to perform operation steps of the method in any one of the first aspect or the possible implementations of the first aspect, or perform operation steps of the cluster management method in any one of the second aspect or the possible designs of the second aspect.

According to a tenth aspect, a computer program product is provided. When the computer program product is run on a computer, a computing device is enabled to perform operation steps of the method in any one of the first aspect or the possible implementations of the first aspect, or perform operation steps of the cluster management method in any one of the second aspect or the possible designs of the second aspect.

According to an eleventh aspect, a chip system is provided. The chip system includes a processor, configured to implement a function of a network device in the method in the first aspect or the second aspect. In a possible design, the chip system further includes a memory, configured to store program instructions and/or data. The chip system may include a chip, or may include the chip and another discrete component.

Based on the implementations provided in the foregoing aspects, this application may further combine the implementations in this application to provide more implementations.

### BRIEF DESCRIPTION OF DRAWINGS

FIG. 1 is a diagram of a computer cluster according to an embodiment of this application;
FIG. 2 is a schematic flowchart of an operating system startup method according to an embodiment of this application;
FIG. 3 is a schematic flowchart of an operating system upgrade method according to an embodiment of this application;
FIG. 4 is a diagram of a structure of a DPU according to an embodiment of this application;
FIG. 5 is a diagram of an operating system startup process according to an embodiment of this application;
FIG. 6 is a diagram of a structure of a cluster management apparatus according to an embodiment of this application; and
FIG. 7 is a diagram of a structure of a computing device according to an embodiment of this application.

### DESCRIPTION OF EMBODIMENTS

For ease of description, terms in this application are first explained.

A data processing unit (data processing unit, DPU) is a dedicated processor for data processing in a data center. The DPU has the following features. (1) The DPU is a high-performance and software-programmable multi-core processor, and generally closely cooperates, based on an advanced reduced instruction set computing machine (advanced reduced instruction set computing machine, ARM) architecture that has been widely used, with a system-on-a-chip (System-on-a-Chip, SoC) component to implement a high-performance computing capability. (2) The DPU includes a high-performance network interface, which can parse and process data at a line speed or an available speed in a network, and efficiently transmit the data to a central processing unit (central processing unit, CPU) or graphics processing unit (graphics processing unit, GPU). (3) The DPU includes various flexible and programmable acceleration engines that can be used in AI offloading, machine learning, security, telecommunication, storage, and the like, and that can improve performance. All of these capabilities are critical to secure next-generation large-scale cloud computing that is of bare-performance and native cloud computing.

Dual-area refers to two storage areas of a memory in the DPU. The two storage areas may be configured in an active/standby relationship, and each area is used to store basic components of an operating system of the DPU. The operating system of the DPU may be a tailored operating system customized based on an application scenario of the DPU, and include some functions of a general-purpose operating system. The general-purpose operating system is relative to the tailored operating system, and is also referred to as a complete operating system. For example, the operating system is used to support an offloading function of the DPU. The operating system (operating system, OS) also provides an operation interface for a user to interact with the system. The basic components of the operating system include at least a disk boot program (such as grub), kernel image, and initial root file system (initrd). A dual-area startup mode is a manner of starting an operating system based on two storage areas that store the operating system.

A cluster is also known as a computer cluster (computer cluster) The computer cluster is a group of loosely or tightly connected computers that work together, and is generally used to perform large jobs. Cluster deployment generally improves overall performance through concurrency, and is more cost-effective than a single computer with an equivalent speed or availability. Computing devices in the computer cluster are connected to each other through a network, and each computing device runs its own operating system instance. In most cases, each computing device uses same hardware and a same operating system. In some cases, different operating systems may alternatively be used on different hardware. The DPU may be installed on the computing device in the computer cluster, and a cluster management system indicates to start the operating system of the DPU.

A job is a big data service submitted by a client. The job may be divided into a plurality of tasks (tasks). The plurality of tasks are distributed to a plurality of computing devices, and the plurality of computing devices execute the plurality of tasks in parallel. When all the tasks are completed, the job is marked as completed. A task is a process of processing some data or processing in a phase in a job. All tasks are scheduled for parallel or serial completion.

To resolve a defect in a process of starting a network device included in a computing device by a cluster management system, embodiments of this application provide a cluster management method, and in particular, provides a technology of starting and managing a network device included in a computing device in a cluster. The network device starts the computing device based on a first startup indication of the cluster management system, including starting an operating system of the network device, and feeding back a startup result of the operating system. In this way, the cluster management system sends the startup indication to the computing device, to control to start the computing device and the operating system of the network device included in the computing device, and the computing device feeds back the startup result. This resolves a problem of how to enable the cluster management system to communicate with the network device in the computing device, so that the cluster management system and the network device can sense each other, and the cluster management system manages the startup of the network device in the cluster. The network device includes two storage areas, and the two storage areas are configured with operating systems of a same type. The network device determines a startup mode of the network device based on the obtained first startup indication. The startup mode includes a dual-area startup mode and a single-area startup mode. The dual-area startup mode indicates a startup manner of starting the operating system based on two storage areas that store the operating system. The single-area startup mode indicates a startup manner of starting the operating system based on one storage area that stores the operating system. When the startup mode is the dual-area startup mode, the operating system that is of the network device and that is stored in a first storage area in the two storage areas is started. In this way, the network device starts the operating system based on the two storage areas, so that reliability of starting the operating system can be improved.

In embodiments of this application, the network device is a device configured to implement communication between devices, for example, a DPU or an intelligent network interface card. The following uses the DPU as the network device as an example.

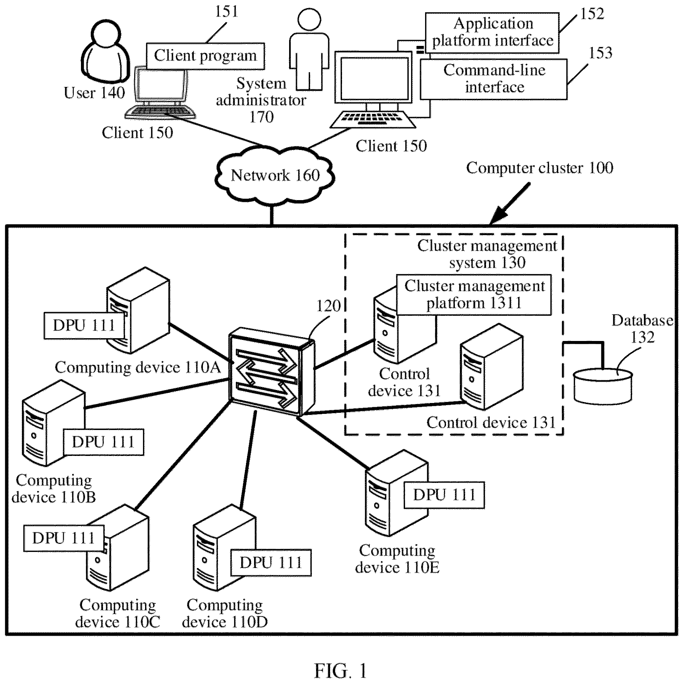

The following describes in detail a cluster management method provided in this application with reference to the accompanying drawings. FIG. 1 is a diagram of a computer cluster 100 according to an embodiment of this application. As shown in FIG. 1, the computer cluster 100 includes a plurality of computing devices, such as a computing device 110A, a computing device 110B, a computing device 110C, a computing device 110D, and a computing device 110E. Each computing device may be an independent server, or may be a virtual machine on a server, or the like. The plurality of computing devices are interconnected through a network 120. The network 120 may refer to an internal communication network of an enterprise (for example, a local area network (Local Area Network, LAN)) or the Internet (Internet). These computing devices are configured to provide computing resources. Each computing device may include a plurality of processors or processor cores, and each processor or processor core may be one computing resource. In this case, one computing device may provide a plurality of computing resources.

The computer cluster 100 further includes a cluster management system 130. The cluster management system 130 is configured to implement management functions such as service management (for example, job splitting and task distribution) and DPU management (for example, operating system deployment and status monitoring). The cluster management system 130 includes one or more control devices 131, and the control device 131 implements a management function of the cluster management system 130 on the computer cluster 100. The control device 131 is also connected to the network 120. A cluster management platform 1311 is installed on the control device 131, and a user operates the cluster management platform 1311. The control device 131 is configured to control job splitting submitted to the computer cluster 100, for example, split one job into a plurality of tasks and assign the tasks to different computing devices for execution. In this embodiment of this application, the cluster management platform includes but is not limited to K8S, openStack, or the like.

The computer cluster 100 may obtain a to-be-processed job in a plurality of manners. A location at which a job is submitted is not limited in this embodiment, and a specific mechanism for submitting the job by a user is not limited either. For example, as shown in FIG. 1, a client program 151 is installed on a client 150, and the client 150 runs the client program 151 to display a user interface (user interface, UI) of a cluster management platform. A user 140 may operate the user interface. The client 150 sends a service request of a big data service to the computer cluster 100 through a network 160, to request the computer cluster 100 to perform distributed processing on service data included in the service request. The client 150 refers to a computer connected to the network 160, and may also be referred to as a workstation (workstation). Different clients may share network resources, such as computing and storage resources. The network 160 may refer to the Internet (Internet). A job may include a plurality of computing tasks, which can be allocated to a plurality of computing resources for execution. Most tasks are executed concurrently or in parallel, and some tasks depend on data generated by other tasks. A quantity of tasks and task data that can be executed concurrently is not limited in this embodiment.

In a computer cluster, there are generally a plurality of to-be-executed jobs. If processing of a single job occupies excessive computing resources, performance of other jobs may be affected. Therefore, the control device 131 may control the computing resources allocated to the to-be-executed jobs, so that a high-priority job can be preferentially executed. The control device 131 may monitor an execution status of a job, and change resource allocation for the job according to a policy. For example, the control device 131 may obtain the policy by accessing information in a database 132. In addition to the policy, the database 132 further stores configuration files of each executed job and to-be-executed job. These configuration files may indicate information such as processing time of a job.

In some embodiments, a DPU 111 may be further disposed on the computing device included in the computer cluster 100. The DPU 111 is configured to replace a network interface card, and implement a function of the network interface card, to accelerate data processing and improve a data transmission rate. In addition, the DPU 111 is further configured to process some service data (for example, big data service data), to improve a data processing rate. For example, the DPU 111 is inserted into a peripheral component interconnect express (Peripheral Component Interconnect Express, PCIe) interface of the computing device in a form of a card. The DPU 111 is connected to the computing device through a PCIe bus, a compute express link (Compute Express Link, CXL), or a unified bus (unified bus, UB, or UBus). A system administrator 170 may control, by invoking an application platform interface (application platform interface, API) 152 or a command-line interface (command-line interface, CLI) interface 153 through the client 150, to start an operating system of the DPU in the computing device, or the like.

In some embodiments, the operating system of the DPU in the computing device may be stored in the cluster management system 130 in a container image manner, to reduce an occupation rate of storage space of the cluster management system by the operating system. DPUs of the plurality of computing devices included in the computer cluster 100 are configured with same operating systems, and DPUs of different computing devices may alternatively be configured with different operating systems.

It should be noted that the DPU in this embodiment of this application may be replaced with another chip or processor like an intelligent network interface card, and the control device 131 implements a management function on an intelligent network interface card chip. The processor may be implemented through a central processing unit (central processing unit, CPU), or may be implemented through an application-specific integrated circuit (application-specific integrated circuit, ASIC), or may be implemented through a programmable logic device (programmable logic device, PLD). The PLD may be a complex program logic device (complex programmable logical device, CPLD), a field-programmable gate array (field-programmable gate array, FPGA), a generic array logic (generic array logic, GAL), a system-on-a-chip (system-on-a-chip, SoC), or any combination thereof.

It should be noted that FIG. 1 shows a general-purpose operating system in a processor of a computing device and an operating system running in a DPU.

The following describes in detail, with reference to the accompanying drawings, an implementation of cluster management provided in an embodiment of this application.

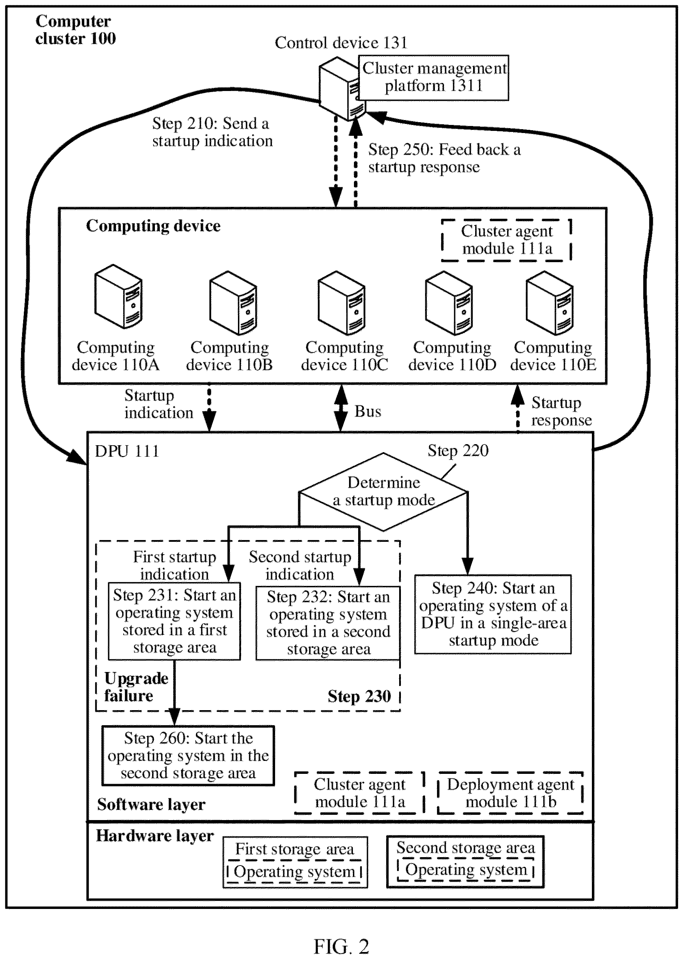

A process of starting a computing device in a computer cluster is described with reference to FIG. 2. It is assumed that DPUs of a plurality of computing devices included in a computer cluster 100 include two storage areas, and the two storage areas are configured with operating systems of a same type. The two storage areas may be configured to be in an active/standby relationship, and consistency between data stored in the two storage areas is implemented in a data synchronization manner. A control device 131 controls to start the plurality of computing devices in the computer cluster 100, including starting operating systems of the DPUs on the computing devices. A computing device startup method provided in an embodiment of this application includes the following steps.

### Step 210: The control device 131 sends a startup indication.

The startup indication indicates to start a computing device in which a DPU is located, including starting an operating system and parameter configuration of the DPU. The parameter configuration may include computing device-related parameter configuration such as parameter configuration of the operating system and parameter configuration of an application program running on the DPU. The following mainly describes how to start the operating system of the DPU and the application program running on the DPU. For a process of starting a general-purpose operating system of the computing device and a process of starting an application program running on the computing device, refer to a process of starting the DPU.

The control device 131 may broadcast the startup indication, or may send the startup indication to each DPU or the computing device in which the DPU is located.

For example, different operating systems are configured for DPUs on different computing devices. For example, a first operating system is configured for a DPU on a first computing device, and a second operating system is configured for a DPU on a second computing device. A function of the first operating system may be different from a function of the second operating system. In this way, the control device 131 may separately send the startup indication to one or more DPUs in each type of operating system.

For another example, a same operating system is configured for DPUs on different computing devices. For example, a first operating system is configured for a DPU on a first computing device, and the first operating system is configured for a DPU on a second computing device. The control device 131 may separately send one startup indication to each DPU, or broadcast the startup indication to a plurality of DPUs.

In some embodiments, the control device 131 is directly connected to the DPU on the computing device through a communication network (for example, a network 120). In this case, the control device 131 may send the startup indication to the DPU through the communication network through which the control device 131 is directly connected to the DPU on the computing device. This is shown by a solid line with an arrow in FIG. 2.

In some other embodiments, the control device 131 sends the startup indication to the computing device through a communication network (for example, a network 120) connected to the computing device, and the computing device sends, by using any one of a PCIe bus, a CXL bus, or a UB bus, the startup indication to the DPU included in the computing device. This is shown by dotted lines with arrows in FIG. 2. For ease of description, the following embodiment is described by using the PCIe bus as an example.

### Step 220: The DPU determines a startup mode.

The startup indication may indicate the DPU to start the operating system of the DPU in a dual-area startup mode, or indicate the DPU to start the operating system of the DPU in a single-area startup mode.

In a possible example, the startup indication includes a startup identifier. Different values of the startup identifier indicate different startup modes. The DPU may determine the startup mode based on the startup identifier included in the startup indication. For example, if a value of the startup identifier is 1, it indicates that the operating system of the DPU is started in the dual-area startup mode; or if a value of the startup identifier is 0, it indicates that the operating system of the DPU is started in the single-area startup mode.

After obtaining the startup indication, the DPU performs step 230 when determining, based on the startup indication, that the startup mode is the dual-area startup mode, or performs step 240 when determining, based on the startup indication, that the startup mode is the single-area startup mode.

Optionally, if the startup indication does not indicate the startup mode, the DPU may determine the startup mode of the DPU according to a preset rule. For example, the preset rule indicates to start the computing device in which the DPU is located preferentially in the dual-area startup mode. When the DPU determines that the two storage areas are configured for the computing device to separately store the operating system, the computing device in which the DPU is located is started in the dual-area startup mode. For another example, when the DPU determines that the two storage areas are not configured for the computing device to separately store the operating system, the computing device in which the DPU is located is started in the single-area startup mode. For another example, when the DPU determines that the two storage areas are configured for the computing device to separately store the operating system, the computing device in which the DPU is located may also be started in the single-area startup mode.

### Step 230: The DPU starts the operating system of the DPU based on the dual-area startup mode.

The dual-area startup mode indicates a startup manner of starting the operating system based on two storage areas that store the operating system. For example, the DPU starts the operating system of the DPU in a polling manner. The polling manner indicates to alternately start operating systems in different storage areas respectively based on a plurality of startup indications sent by a cluster management system. It may be understood that the DPU performs the startup alternately based on startup indications and operating systems in the two storage areas.

For example, the DPU includes a first storage area and a second storage area. The DPU receives a first startup indication sent by the cluster management system, and determines the startup mode of the DPU based on the obtained first startup indication. When the startup mode is the dual-area startup mode, step 231 is performed. The operating system that is of the DPU and that is stored in the first storage area is started. Then, the DPU receives a second startup indication sent by the cluster management system, and the DPU determines the startup mode of the DPU based on the second startup indication. When the startup mode is the dual-area startup mode, step 232 is performed. The operating system that is of the DPU and that is stored in the second storage area is started. The first startup indication and the second startup indication are startup indications that are sent by the cluster management system and that are adjacent in a time sequence.

For another example, the DPU includes a plurality of storage areas, such as a first storage area, a second storage area, and a third storage area. The DPU receives a first startup indication sent by the cluster management system, and determines the startup mode of the DPU based on the obtained first startup indication. When the startup mode is the dual-area startup mode, the operating system that is of the DPU and that is stored in the first storage area is started. Then, the DPU receives a second startup indication sent by the cluster management system, and the DPU determines the startup mode of the DPU based on the second startup indication. When the startup mode is the dual-area startup mode, the operating system that is of the DPU and that is stored in the second storage area is started. The DPU receives a third startup indication sent by the cluster management system, and the DPU determines the startup mode of the DPU based on the third startup indication. When the startup mode is the dual-area startup mode, the operating system that is of the DPU and that is stored in the third storage area is started. The first startup indication, the second startup indication, and the third startup indication are startup indications that are sent by the cluster management system and that are adjacent in a time sequence.

In a possible embodiment, when the operating system fails to be started in the first storage area, the operating system in the second storage area is started. The second storage area is a storage area, other than the first storage area, in the two storage areas that are in the computing device and that store the operating system in the dual-area startup mode.

When the operating system in the first storage area fails to be started, the DPU feeds back a startup failure response, and performs step 250. The DPU may further restart the operating system in the first storage area. Alternatively, the DPU performs step 260. To be specific, the DPU starts the operating system in the second storage area. In this way, when the operating system of the DPU fails to be started, the DPU may start the operating system in the other storage area. In a life cycle management process of the operating system, the operating system is started as quickly as possible, to restore a service supported by the DPU, run an application program, and improve reliability of an entire DPU system.

It should be noted that, when the operating system in the second storage area fails to be started, the two steps of feeding back the startup failure response and starting the operating system in the first storage area by the DPU may be performed asynchronously, to improve a rate of restoring the operating system and the service by the DPU, and report a status of the DPU to the cluster management system in time.

### Step 240: The DPU starts the operating system of the DPU in the single-area startup mode.

The single-area startup mode indicates a startup manner of starting the operating system based on one storage area that stores the operating system. For example, the DPU performs the startup based on the operating system in one storage area. The DPU includes a first storage area and a second storage area. Operating systems of a same type are configured for the first storage area and the second storage area. The first storage area is an active storage area, and the second storage area is a standby storage area. The DPU starts the operating system in the first storage area at each time. In other words, although the computing device is configured with two areas that are separately used to store the to-be-started operating system, an operating system in a specified storage area may also be started in the single-area startup mode.

Optionally, the DPU includes only one storage area used to store the operating system. In this case, the operating system in the storage area in the DPU is started in the single-area startup mode.

### Step 250: The DPU feeds back a startup response.

The DPU may feed back the startup response to the control device 131 through the communication network (for example, the network 120) through which the DPU is connected to the control device 131. Alternatively, the DPU feeds back, by using the PCIe bus, the startup response to the computing device in which the DPU is located, and the computing device feeds back the startup response to the control device 131 through the communication network (for example, the network 120) through which the computing device is connected to the control device 131.

In some embodiments, as shown in FIG. 2, a DPU 111 includes a cluster agent module 111a and a deployment agent module 111b. The cluster agent module 111a is configured to identify a management indication of the DPU (for example, the startup indication or an upgrade indication) sent by the control device 131, and feed back a management result to the control device 131, to implement a function of mutual sensing between the DPU 111 and the control device 131. The deployment agent module 111b is configured for a function such as deploying the operating system in the DPU. Optionally, the cluster agent module 111a and the deployment agent module 111b may alternatively be separately deployed. For example, the cluster agent module 111a is deployed on the computing device in which the DPU is located, and the deployment agent module 111b is deployed on the DPU 111. The cluster agent module 111a and the deployment agent module 111b may alternatively be deployed on the DPU in a centralized manner. For example, the cluster agent module 111a and the deployment agent module 111b are deployed on a microprocessor unit of the DPU.

The startup response indicates a result of starting the computing device in which the DPU is located, including a startup result of the operating system of the DPU. The startup response may be a startup success response or a startup failure response. For example, if duration of starting the operating system by the DPU expires, the DPU fails to start the operating system. For example, if duration of starting the operating system by the DPU exceeds 1 minute or 30 seconds, it indicates the duration of starting the operating system by the DPU expires. Timeout time may be set based on a service requirement, or may be determined based on historical duration of starting the operating system by the DPU. For example, average duration of starting the operating system each time is calculated based on the historical duration.

In FIG. 2, how to start the operating system of the DPU is described. After the operation succeeds, a parameter may be further configured. For example, the DPU configures computing device-related parameters such as a parameter of the application program running on the DPU and a parameter of the application program running on the computing device.

This embodiment of this application provides a solution for managing the startup of the operating system of the DPU in the cluster. The cluster management system may control the startup or upgrade of the operating system of the DPU in the cluster. When the operating system of the DPU fails to be started or is successfully started, a feedback may be quickly sent to the cluster management system, so that the cluster management system monitors a running status of the operating system of the DPU. This implements a function of managing the DPU in the cluster by the cluster management system in a unified manner, and improves management and operation and maintenance efficiency of the operating system of the DPU.

In a possible embodiment, in addition to implementing, via the DPU, startup management on the computing device in which the DPU is located, the cluster management system upgrades the operating system to repair a defect of the operating system, enhance a function of the operating system, and improve user experience. The cluster management system may upgrade the computing device via the DPU. The following uses an example in which an upgrade operation is upgrading the operating system for description. The upgrade operation may be performed periodically based on a service requirement, or is performed when the operating system is faulty. During the operating system upgrade, the operating system is interrupted for a short period of time. This causes an interruption impact on the service. Usually, the operating system is upgraded when the system is idle (for example, at night), to reduce the interruption impact on the service as much as possible. The operating system upgrade may be a specific scenario of the operating system startup.

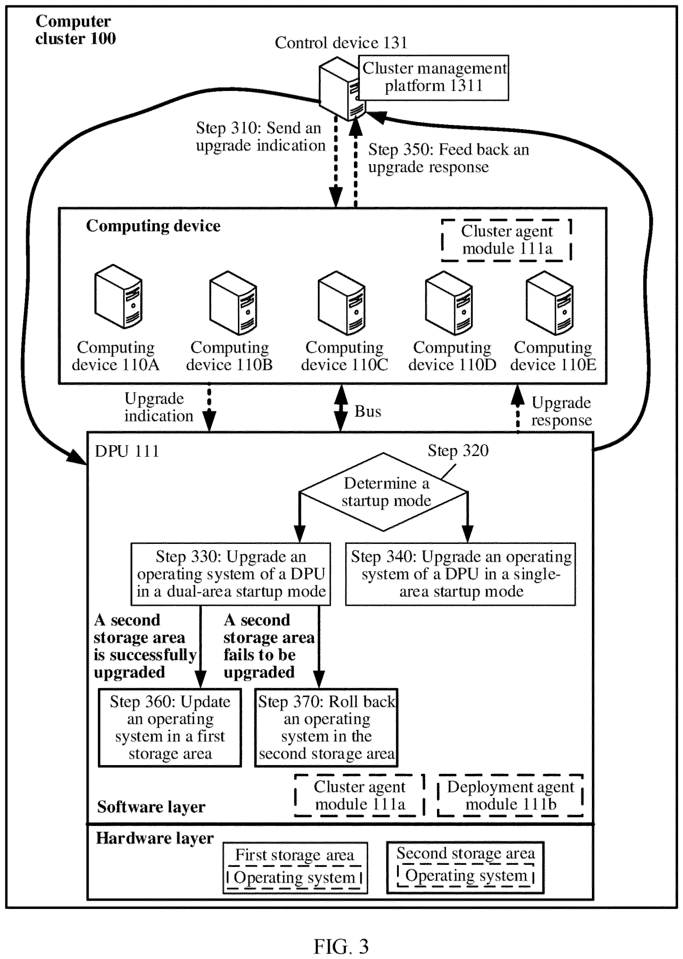

FIG. 3 is a diagram of an operating system upgrade method according to an embodiment of this application. A process of upgrading an operating system includes the following steps.

### Step 310: A control device 131 sends an upgrade indication.

The upgrade indication indicates a computing node to perform an upgrade operation. The upgrade operation includes upgrade processing on software and/or hardware of the computing node, such as the operating system, a parameter, and firmware (Firmware, FW). The upgrade indication may include a new-version operating system. For a manner of sending the upgrade indication by the control device 131, refer to descriptions of sending the startup indication by the control device 131 in step 210.

### Step 320: A DPU determines a startup mode.

The upgrade indication may indicate the DPU to start an operating system of the DPU in a dual-area startup mode, or indicate the DPU to start an operating system of the DPU in a single-area startup mode. For a method for determining the startup mode by the DPU, refer to descriptions of determining the startup mode by the DPU in step 220.

After obtaining the upgrade indication, the DPU performs step 330 when determining that the startup mode is the dual-area startup mode, or performs step 340 when determining that the startup mode is the single-area startup mode.

### Step 330: The DPU upgrades the operating system of the DPU based on the dual-area startup mode.

The dual-area startup mode indicates a startup manner of starting the operating system based on two storage areas that store the operating system. For example, the DPU upgrades the operating system of the DPU in a polling manner. For a method for upgrading the operating system of the DPU in the polling manner by the DPU, refer to descriptions of starting the operating system of the DPU in the polling manner by the DPU in step 230.

It is assumed that, when running the operating system in a first storage area, the DPU upgrades the operating system in a second storage area based on the upgrade indication. In other words, the DPU replaces the old-version operating system stored in the second storage area with a new-version operating system, and starts the new-version operating system. It may be understood that, before the operating system upgrade, operating systems of a same type are configured for the two storage areas. After the operating system upgrade, one storage area stores the old-version operating system, and the other storage area stores the new-version operating system.

In this way, when the operating system of the DPU fails to be upgraded, the DPU may restart the operating system in the first storage area. In a life cycle management process of the operating system, the operating system is started as quickly as possible to restore a service supported by the DPU, run an application program, and improve reliability of an entire DPU system.

### Step 340: The DPU upgrades the operating system of the DPU based on the single-area startup mode.

The single-area startup mode indicates a startup manner of starting the operating system based on one storage area that stores the operating system. For example, the DPU performs upgrade based on the operating system in the one storage area. The DPU includes a first storage area and a second storage area. Operating systems of a same type are configured for the first storage area and the second storage area. The first storage area is an active storage area, and the second storage area is a standby storage area. The DPU upgrades the operating system in the first storage area at each time. In other words, although a computing device is configured with two areas that are separately used to store the to-be-upgraded operating system, an operating system in a specified storage area may also be upgraded in the single-area startup mode.

Optionally, the DPU includes only one storage area used to store the operating system. In this case, the operating system in the storage area in the DPU is upgraded in the single-area startup mode.

### Step 350: The DPU feeds back an upgrade response.

The upgrade response may be an upgrade success response or an upgrade failure response. For a method for feeding back the upgrade response by the DPU, refer to descriptions of feeding back the startup response by the DPU in step 250.

It is assumed that the DPU upgrades the operating system in the second storage area. If the operating system in the second storage area is successfully upgraded, in other words, the old-version operating system stored in the second storage area is updated to the new-version operating system, the DPU feeds back the upgrade success response. The DPU can alternatively perform an active-standby switchover operation. For example, if the first storage area is the active storage area, and the second storage area is the standby storage area, the second storage area is set to be the active storage area, and the first storage area is set to be the standby storage area. Further, the DPU runs, based on the operating system in the second storage area, a service that is first run based on the operating system in the first storage area, and then upgrades the operating system in the first storage area after the active-standby switchover. For example, the DPU performs step 360: The DPU updates the operating system in the first storage area. The DPU copies the new-version operating system to the first storage area, so that the operating system stored in the first storage area is consistent with the operating system stored in the second storage area, to facilitate a subsequent operation on the operating system of the DPU.

If the operating system in the second storage area fails to be upgraded, to be specific, the old-version operating system stored in the second storage area is not updated to the new-version operating system, the DPU feeds back the upgrade failure response. The DPU may further perform a rollback operation on the operating system in the second storage area. For example, the DPU performs step 370: Roll back the operating system in the second storage area. Rollback (Rollback), also referred to as upgrade rollback, is a behavior of restoring a program or data to be in a previous correct state when an error occurs in program or data processing. For example, the old-version operating system included in a rollback indication is copied to the second storage area, so that the operating system stored in the second storage area is consistent with the operating system stored in the first storage area, to facilitate a subsequent operation on the operating system of the DPU.

In another possible implementation, the upgrade indication indicates a network device to perform an upgrade operation on an operating system in a storage partition.

It is assumed that the DPU upgrades the operating system in the second storage area. If the operating system in the second storage area is successfully upgraded, the DPU may further receive an update indication sent by the control device 131, and update the operating system in the first storage area based on the update indication. For example, the new-version operating system included in the update indication is copied to the first storage area, so that the operating system stored in the first storage area is consistent with the operating system stored in the second storage area, to facilitate a subsequent operation on the operating system of the DPU.

If the operating system in the second storage area fails to be upgraded, the DPU may further receive a rollback indication sent by the control device 131, and update the operating system in the second storage area based on the rollback indication. The DPU may further restart the operating system in the first storage area. When failing to upgrade the operating system, the DPU restarts the old-version operating system stored in the first storage area, and runs an application program, to improve the reliability of the entire DPU system. That the DPU fails to upgrade the operating system includes but is not limited to upgrade timeout, for example, the new-version operating system has a defect, the DPU does not support running the new-version operating system, or the like.

In a possible implementation, the DPU includes a watchdog (watchdog). The watchdog, also referred to as a watchdog timer (watchdog timer), is configured to monitor a process of starting the operating system of the DPU, to avoid an infinite loop occurring on a program.

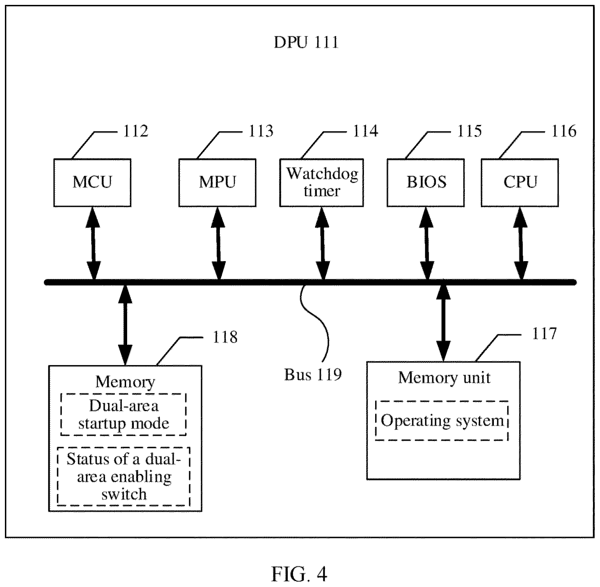

For example, FIG. 4 is a diagram of a structure of a DPU according to an embodiment of this application. A DPU 111 includes a microcontroller unit (Microcontroller Unit, MCU) 112, a microprocessor unit (Microprocessor Unit, MPU) 113, a watchdog timer 114, a basic input/output system (Basic Input/Output System, BIOS) 115, a central processing unit (Central Processing unit, CPU) 116, a memory unit 117, and a memory 118. The MCU 112, the MPU 113, the watchdog timer 114, the BIOS 115, the CPU 116, the memory unit 117, and the memory 118 are interconnected through a bus 119.

The MPU 113 is configured to manage a status of a dual-area enabling switch, and the status of the dual-area enabling switch indicates a startup mode. When the status indicated by the dual-area enabling switch is on, the BIOS 115 may determine, based on the status indicated by the dual-area enabling switch, that the startup mode is a dual-area startup mode, and select a specified storage area to start an operating system. When the status indicated by the dual-area enabling switch is off, the BIOS 115 may determine, based on the status indicated by the dual-area enabling switch, that the startup mode is a single-area startup mode, and may start the operating system according to a preset rule. The MPU 113 stores the status of the dual-area enabling switch and the associated startup mode. For example, the MPU 113 performs step 220 in FIG. 2.

In a possible implementation, the MPU 113 updates the status of the dual-area enabling switch based on a startup identifier. For example, if the status of the dual-area enabling switch is off, and the startup identifier indicates the dual-area startup mode, the MPU 113 updates the status of the dual-area enabling switch from off to on. For another example, if the status of the dual-area enabling switch is on, and the startup identifier indicates the single-area startup mode, the MPU 113 updates the status of the dual-area enabling switch from on to off.

The watchdog timer generally includes an input end, that is, a watchdog feeding (kicking the dog/service the dog) end, and an output end, that is, a reset (reset) end. The watchdog timer 114 may be connected to the MPU 113. When the MPU 113 works normally, a signal is output to the watchdog feeding end at intervals, and the watchdog timer is reset. If the watchdog feeding is not performed within preset duration (generally when a program is running), in other words, the watchdog timer 114 times out, a reset signal is output to the MPU 113, so that the MPU 113 is reset to avoid breakdown of the MPU 113. The watchdog timer 114 may be disposed inside the MPU 113, or may be disposed outside the MPU 113, and a disposition location of the watchdog timer 114 is not limited. A function of the watchdog timer 114 may be implemented by software or may be implemented by hardware.

The CPU 116 is configured to start the operating system and an application program of the DPU 111 in the dual-area startup mode or the single-area startup mode. For example, the CPU 116 loads the BIOS 115, runs the operating system of the storage area indicated by the MPU 113, detects a hardware status recorded by the MCU 112, and skips starting the MCU 112, to implement quick system startup. The hardware status refers to, for example, information about hardware and a peripheral that support application running. The peripheral may be information about a PCIe bus. For example, the CPU 116 performs step 230, step 240, or step 260 in FIG. 2.

The memory 118 includes information about the status of the dual-area enabling switch and the startup mode, and operating systems of two storage areas. The memory unit 117 is configured to temporarily store an operating system program run by the DPU.

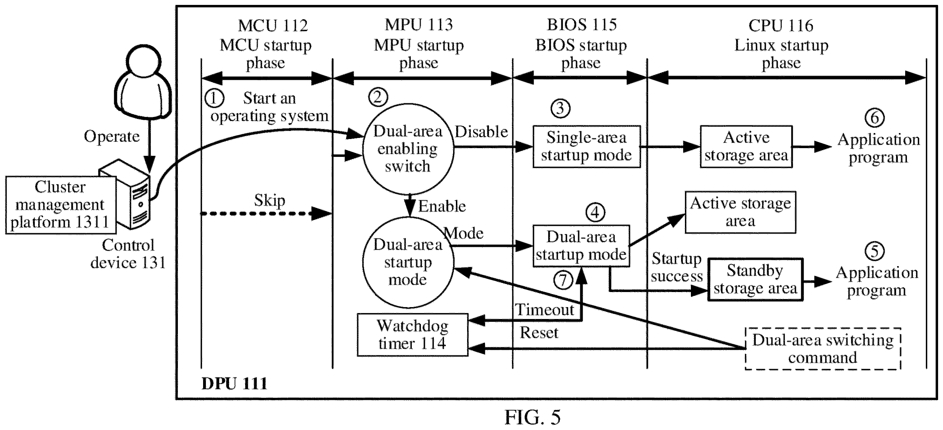

FIG. 5 is a diagram of a startup process of an operating system according to an embodiment of this application. Each phase in a startup process of a DPU in FIG. 2 is illustrated in FIG. 5. A user operates a cluster management platform 1311, and a control device 131 receives a user operation. The control device 131 sends an indication for starting an operating system or an indication for upgrading an operating system to a DPU 111. (1) The DPU 111 receives the startup indication or the upgrade indication, and (2) an MPU 113 updates a status of a dual-area enabling switch based on the startup indication or the upgrade indication. For example, the MPU 113 determines the status of the dual-area enabling switch based on a startup identifier.

If the status of the dual-area enabling switch is on, (3) a BIOS 115 determines that a startup mode is a dual-area startup mode. (4) The BIOS 115 determines a standby storage area for starting the operating system, and the BIOS 115 starts the operating system in the standby storage area based on an indication of the MPU 113. In a process of starting the operating system in the standby storage area, a watchdog timer 114 monitors starting duration.

If the status of the dual-area enabling switch is off, (6) the BIOS 115 starts an operating system in an active storage area in a single-area startup mode. A CPU 116 is configured to load a program of the BIOS 115, run the operating system of the active storage area indicated by the MPU 113, and detect a hardware status. Because an MCU 112 stores the hardware status, startup of the MCU 112 is skipped, and an application program is run based on the hardware status to implement quick system startup.

(5) If the startup of the operating system in the standby storage area is successful, the CPU 116 is configured to load the program of the BIOS 115, run the operating system of the standby storage area indicated by the MPU 113, and detect the hardware status. Because the MCU 112 stores the hardware status, the startup of the MCU 112 is skipped, and the application program is run based on the hardware status to implement quick system startup.

(7) If the startup of the operating system in the standby storage area is unsuccessful, the watchdog timer 114 controls to reset the MPU 113. The MPU 113 receives the hardware status and enables the CPU 116 to reset. The user may also update the status of the dual-area enabling switch through a dual-area switching command (dboot-tools), and control the watchdog timer 114 to reset and start the MPU 113.

Optionally, the user may alternatively perform an operation on a user interface of a cluster management system, and the cluster management system obtains a reboot (reboot) command indicated by the user, so that the DPU performs operation steps of starting or upgrading a computing device in the foregoing embodiments.

It may be understood that a warm reboot (warm reboot) frame of a Linux kernel may be modified, in other words, a hardware status recording function like a PCIe link may be added. The User runs a reboot (reboot) command to trigger to start or upgrade the computing device. After a system is started, a value of a Linux kernel file node/sys/kernel/reboot/mode is warm (warm). An MPU can detect information about the hardware status like the PCIe link. The BIOS skips initialization of such hardware or a peripheral, to reduce system startup duration and implement quick system startup. For example, duration for starting or upgrading the computing device is reduced from 3 minutes to fewer than 1.5 minutes.

It may be understood that, to implement functions in the foregoing embodiments, the computing device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

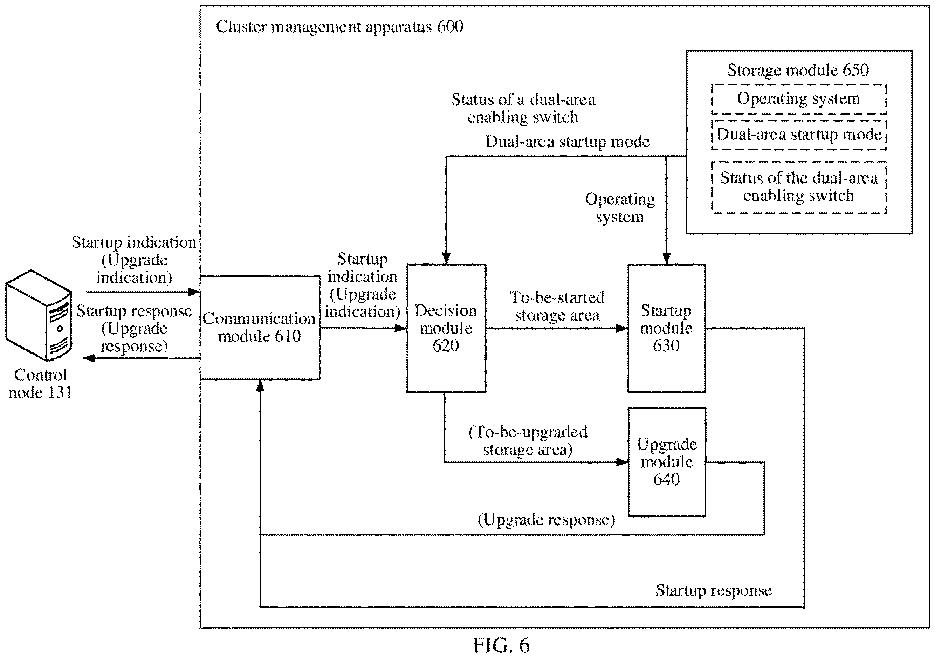

The foregoing describes in detail the cluster management method provided according to the embodiment with reference to FIG. 1 to FIG. 5. The following describes a cluster management apparatus provided according to an embodiment with reference to FIG. 6.

FIG. 6 is a diagram of a structure of a possible cluster management apparatus according to an embodiment. These cluster management apparatuses may be configured to implement functions of a DPU in the foregoing method embodiments, and can also implement beneficial effects of the foregoing method embodiments. In this embodiment, the cluster management apparatus may be a DPU 111 shown in FIG. 2 or FIG. 3, or may be a module (for example, a chip) applied to a computing device.

As shown in FIG. 6, a cluster management apparatus 600 includes a communication module 610, a decision module 620, a startup module 630, an upgrade module 640, and a storage module 650. The cluster management apparatus 600 is configured to implement a function of the DPU 111 in the method embodiment shown in FIG. 2 or FIG. 3.

The communication module 610 is configured to obtain a startup indication, feed back a startup response, obtain an upgrade indication, and feed back an upgrade response. The startup indication indicates to start a computing device in which the DPU 111 is located, including starting an operating system of the DPU 111. The upgrade indication indicates to upgrade the computing device in which the DPU 111 is located, including upgrading the operating system of the DPU 111. The startup response indicates a startup result of the computing device in which the DPU 111 is located. The upgrade response indicates an upgrade result of the computing device in which the DPU 111 is located. For example, the communication module 610 is configured to perform step 210 and step 250 in FIG. 2. For another example, the communication module 610 is configured to perform step 310, step 350, step 360, and step 380 in FIG. 3.

The decision module 620 is configured to determine a startup mode of the DPU 111. For example, the decision module 620 is specifically configured to determine the startup mode of the DPU 111 based on a startup identifier included in the startup indication. For another example, the decision module 620 is configured to determine the startup mode of the DPU 111 according to a preset rule. For example, the decision module 620 is configured to perform step 220 in FIG. 2. For another example, the decision module 620 is configured to perform step 320 in FIG. 3.

The startup module 630 is configured to start the operating system of the DPU 111 in response to the startup indication. When the startup mode is a dual-area startup mode, the operating system is started in the dual-area startup mode. The dual-area startup mode indicates a startup manner of starting the operating system based on two storage areas that store the operating system. For example, the startup module 630 is configured to perform step 230, step 240, and step 260 in FIG. 2.

The upgrade module 640 is configured to upgrade the operating system of the DPU 111 in response to the upgrade indication. When the startup mode is the dual-area startup mode, the operating system is upgraded in the dual-area startup mode. For example, the upgrade module 640 is configured to perform step 330, step 340, step 370, step 390, and step 3100 in FIG. 3.

The storage module 650 may correspond to a network device that is in the foregoing method embodiments and that is configured to store information about an operating system, a status of a dual-area enabling switch, the dual-area startup mode, and the like.

It should be understood that the cluster management apparatus 600 in this embodiment of this application may be implemented through the DPU. The cluster management apparatus 600 according to this embodiment of this application may correspondingly perform the method described in embodiments of this application, and the foregoing and other operations and/or functions of the units in the cluster management apparatus 600 are respectively used to implement corresponding procedures of the method in FIG. 2 or FIG. 3. For brevity, details are not described herein again.

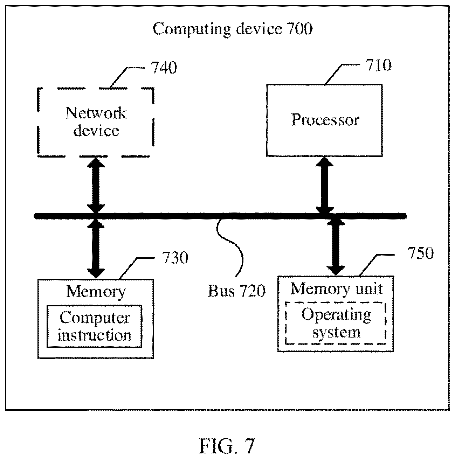

FIG. 7 is a diagram of a structure of a computing device 700 according to an embodiment. As shown in the figure, the computing device 700 includes a processor 710, a bus 720, a memory 730, a memory unit 750 (which may also be referred to as a main memory (main memory) unit), and a network device 740. The processor 710, the memory 730, the memory unit 750, and the network device 740 are connected through the bus 720.

It should be understood that in this embodiment, the processor 710 may be a CPU, or the processor 710 may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like.

The network device 740 is configured to implement communication between the computing device 700 and an external device or component. In this embodiment, the network device 740 is configured to exchange data with another computing device. For example, the network device 740 may be an intelligent network interface card or a DPU.

In a possible implementation, for a structure of the network device 740, refer to a logical structure of a DPU 111 shown in FIG. 4, and the network device 740 is separately configured to implement functions performed by entities in the method shown in FIG. 5. For brevity, details are not described herein again.

The bus 720 may include a path for transmitting information between the foregoing components (such as the processor 710, the memory unit 750, and the memory 730). In addition to a data bus, the bus 720 may further include a power bus, a control bus, a status signal bus, and the like. However, for clear description, various buses are marked as the bus 720 in the figure. The bus 720 may be a peripheral component interconnect express (Peripheral Component Interconnect Express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX) protocol, or the like.

In an example, the computing device 700 may include a plurality of processors. The processor may be a multi-core (multi-core) processor. The processor herein may be one or more devices, circuits, and/or computing units configured to process data (for example, computer program instructions). The processor 710 may invoke information that is about an operating system, a dual-area startup mode, and a status of a dual-area enabling switch and that is stored in the memory 730, to start the computing device 700 or upgrade the computing device 700.

It should be noted that, in FIG. 7, only an example in which the computing device 700 includes one processor 710 and one memory 730 is used. In this case, the processor 710 and the memory 730 each are configured to indicate a type of component or device. In a specific embodiment, a quantity of components or devices of each type may be determined based on a service requirement.

The memory unit 750 may correspond to a storage medium configured to store information about an operating system of a computing device, and the like in the foregoing method embodiments. The memory unit 750 may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 730 is configured to store a new-version operating system or an old-version operating system, and may be a solid state disk or a hard disk drive.

It should be understood that the computing device 700 may be a computing device in a cluster. The network device 740 of the computing device 700 according to this embodiment may correspond to a cluster management apparatus 600 in this embodiment, and may correspondingly execute a corresponding body in FIG. 2 and FIG. 3. In addition, the foregoing and other operations and/or functions of each module in the cluster management apparatus 600 are respectively used to implement a corresponding process in FIG. 2 or FIG. 3, and for brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist as discrete components in a network device or a terminal device.

This application further provides a chip system. The chip system includes a processor, configured to implement a function of the data processing unit in the foregoing method. In a possible design, the chip system further includes a memory, configured to store program instructions and/or data. The chip system may include a chip, or may include the chip and another discrete component.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

The foregoing descriptions are merely specific implementations, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A cluster management method, wherein the method is performed by a network device connected to a cluster management system, and the method comprises:
determining a startup mode of the network device based on an obtained first startup indication, wherein the first startup indication indicates the network device to start a computing device in which the network device is located;
starting, when the startup mode is a dual-area startup mode, an operating system that is of the network device and that is stored in a first storage area, wherein the dual-area startup mode indicates a startup manner of starting the operating system based on two storage areas that store the operating system, and the first storage area is one of the two storage areas; and
feeding back a startup response, wherein the startup response indicates a startup result of the operating system.

2. The method according to claim 1, wherein the determining a startup mode of the network device based on an obtained first startup indication comprises:
obtaining the first startup indication, wherein the first startup indication comprises a startup identifier; and
determining the startup mode based on the startup identifier, wherein the startup mode comprises the dual-area startup mode and a single-area startup mode, and the single-area startup mode indicates a startup manner of starting the operating system based on one storage area that stores the operating system.

3. The method according to claim 1, wherein the determining a startup mode of the network device based on an obtained first startup indication comprises:
obtaining the first startup indication; and
determining the startup mode of the network device according to a preset rule, wherein the preset rule indicates to start the computing device in which the network device is located preferentially in the dual-area startup mode.

4. The method according to any one of claims 1 to 3, wherein the starting, when the startup mode is a dual-area startup mode, an operating system in a first storage area comprises:
determining the first storage area in the two storage areas in a polling manner, wherein the polling manner indicates to alternately start operating systems in different storage areas respectively based on a plurality of startup indications sent by the cluster management system; and
starting the operating system in the first storage area.

5. The method according to claim 4, wherein the method further comprises:
determining the startup mode of the network device based on an obtained second startup indication, wherein the second startup indication indicates the network device to start the computing device in which the network device is located, and the second startup indication and the first startup indication are startup indications that are sent by the cluster management system and that are adjacent in a time sequence; and
when the startup mode is the dual-area startup mode, starting the operating system that is of the network device and that is stored in a second storage area of the network device.

6. The method according to claim 1, wherein the method further comprises:
when the startup result is that the startup fails, starting the operating system in a second storage area, wherein the second storage area is a storage area, other than the first storage area, in the two storage areas that are in the network device and that store the operating system in the dual-area startup mode.

7. The method according to claim 1, wherein the method further comprises:
obtaining an upgrade indication, wherein the upgrade indication indicates the network device to perform an upgrade operation;
determining the startup mode of the network device; and
when the startup mode is the dual-area startup mode, upgrading the operating system that is of the network device and that is stored in a second storage area, wherein the second storage area is a storage area, other than the first storage area, in the two storage areas that are in the network device and that store the operating system in the dual-area startup mode, and the second storage area is a standby storage area; and
feeding back an upgrade response, wherein the upgrade response indicates an upgrade result of the operating system.

8. The method according to claim 7, wherein the method further comprises:
when the operating system in the second storage area is successfully upgraded, performing an upgrade operation on the operating system in the first storage area.

9. The method according to claim 7, wherein the method further comprises:
when the operating system in the second storage area fails to be upgraded, performing a rollback operation on the operating system in the second storage area.

10. The method according to any one of claims 1 to 9, wherein the network device is a data processing unit DPU or an intelligent network interface card.

11. The method according to claim 10, wherein the network device comprises a microprocessor MPU, a basic input/output system BIOS, and a central processing unit CPU, wherein the method comprises:
the MPU is configured to manage a status of a dual-area enabling switch, wherein the status of the dual-area enabling switch indicates the startup mode;
the BIOS is configured to determine the startup mode of the network device based on the status of the dual-area enabling switch; and
the CPU is configured to start the operating system of the network device in the dual-area startup mode or the single-area startup mode.

12. A network device, comprising a microprocessor, a basic input/output system, and a central processing unit, wherein the microprocessor, the basic input/output system, and the central processing unit are respectively configured to implement operation steps of the method according to any one of claims 1 to 11.

13. A computing system, wherein the computing system comprises a memory and the network device according to claim 14, and the memory is configured to store a group of computer instructions; and when executing the group of computer instructions, the network device performs operation steps of the method according to any one of claims 1 to 11.
